(19) Europäisches Patentamt

European Patent Office

Office européen des brevets

(11) **EP 0 549 183 B1**

(12) **EUROPEAN PATENT SPECIFICATION**

(45) Date of publication and mention
of the grant of the patent:
**14.05.2003 Bulletin 2003/20**

(51) Int Cl.⁷: **G06T 17/00**

(21) Application number: **92311191.8**

(22) Date of filing: **09.12.1992**

(54) **System for displaying solid cuts for surfaces of solid models**

System zur Anzeige von räumlichen Einschnitten für Festkörpermodellflächen

Système pour l'affichage de coupes solides pour les surfaces de modèles solides

(84) Designated Contracting States:
**DE FR GB**

(30) Priority: **23.12.1991 US 812394**

(43) Date of publication of application:
**30.06.1993 Bulletin 1993/26**

(73) Proprietor: **GENERAL ELECTRIC COMPANY**
**Schenectady, NY 12345 (US)**

(72) Inventors:
• **Lorensen, William Edward**
**Ballston Lake, New York 12019 (US)**
• **Cline, Harvey Ellis**
**Schenectady, New York 12309 (US)**
• **Teeter, Bruce Charles**
**Delafield, Wisconsin 53018 (US)**
• **Ludke, Siegwalt**
**Scotia, New York 12302 (US)**

(74) Representative: **Pedder, James Cuthbert et al**
**GE London Patent Operation,**
**Essex House,**
**12/13 Essex Street**
**London WC2R 3AA (GB)**

(56) References cited:
**EP-A- 0 204 225        EP-A- 0 216 156**
**EP-A- 0 365 141        EP-A- 0 376 181**
**US-A- 4 985 834**

• **MEDICAL PHYSICS vol. 15, no. 3, May 1988, NEW YORK, USA pages 320 - 327 CLINE ET AL 'Two algorithms for the three-dimensional reconstruction of tomograms'**
• **SYSTEMS & COMPUTERS IN JAPAN vol. 22, no. 3, 1991, NEW YORK US pages 94 - 107 SUTO ET AL 'An Algorithm for Removing Sections of Bone from X-Ray CT Models'**

**Description**

CROSS REFERENCE TO RELATED APPLICATIONS

This application is related to applications *System For 3D Scan Conversion of A Polygonal Model Into A Point and Normal Format, Displayed Utilizing an Accelerator Circuit,* Ser. No. (Docket RD-21,024), *Solid Models Generation By Span Method Using Dividing Cubes,* Ser. No. (Docket No. RD-21,335), and *Apparatus and Method for Displaying Surgical Cuts In Three-Dimensional Models,* Ser. No. (Docket No. RD-21,827), all by Harvey E. Cline, William E. Lorensen and Siegwalt Ludke, all filed simultaneously with this application, and all assigned to the present assignee.

BACKGROUND OF THE INVENTION

1. Field of the Invention

The present invention relates to a three-dimensional (or 3D) graphics workstation and more specifically to a 3D graphics workstation which displays cut surfaces of a 3D model as a solid.

2. Description of Related Art

Conventional computer graphic methods display polygonal models by first transforming the model into a wireframe. A wireframe is a network of lines connecting the vertices of a polygonal model. The wireframe is then projected onto the image plane. The intensities of the vertex pixels are calculated to create an image resembling a solid shaded 3D model. The intensity of any desired pixel is proportional to the component of a vector normal to the image surface which is parallel to the direction of simulated impinging light.

Surfaces of the image which lie behind other surfaces are hidden. Usually a depth buffer, being a memory element, is used to store the present depth of each pixel in the 3D image so that only the visible surfaces are displayed. The depths of subsequent pixels are compared to the present depths of pixels in the depth buffer. The depth buffer is updated when a pixel having a shallower depth is encountered. For additional details, see *Fundamentals of Interactive Computer Graphics* by Foley and Van Dam, Addison-Wesley Press 1982, chapter 8, pages 267-318.

One or more structures in a model may be manipulated by being rotated and and cut in various planes. Transformations of coordinates by multiplication with a 4x4 matrix equation are used to rotate the model. After transformation, the transformed model is displayed.

The polygonal models may be generated by conventional CAD/CAM methods or from volume data as described in the "marching cubes" method of U.S. Patent 4,710,876, *System and Method for the Display of Surface Structures Contained Within the Interior Re-*

*gion of a Solid Body* by Harvey E. Cline and William E. Lorensen issued Dec. 1, 1987, assigned to the present assignee. The volume data is obtained from conventional 3D imaging systems such as Magnetic Resonant Imaging (MRI), Computed Axial Tomography (CAT), Positron Emission Tomography (PET) etc.

Another method of displaying models is described in U.S. Patent 4,719,585, issued Jan. 12, 1988, *Dividing Cubes System and Method for the Display of Surface Structures Contained Within the Interior Region of a Solid Body* by Harvey E. Cline, Siegwalt Ludke, and William E. Lorensen, ("Dividing Cubes") assigned to the present assignee. The method begins with volume data and creates a surface described by a number of point and normal vectors associated with each point, rather than polygons. The "dividing cubes" method has been used to display surfaces contained within volumetric medical data.

Images produced by conventional methods do not discriminate between front-facing surfaces, and the inside of back-facing surfaces. Models which are cut in several planes can be difficult to interpret since the shading is the same for front-facing surfaces and the inside of back-facing surfaces, causing an observer to confuse the surfaces. In order to manipulate the models correctly, such as in the case of surgical planning, the front-facing surfaces and the back-facing surfaces must be distinguishable. Surgical planning is the simulation of surgery on a graphics workstation using actual data acquired from the subject to be operated on. Therefore, there is a need for a device which can display images in an unambiguous manner, and can display each image quickly.

SUMMARY OF THE INVENTION

The present invention is set forth in Claims 1 and 6.

A feature of the present invention is to provide a display system that can more clearly than heretofore possible display sectional cuts through models, thereby simulating structures of the model.

Another feature of the present invention is to make manipulation of solid models practical on a relatively low-power workstation by reducing processing time.

Another feature of the present invention is to provide a workstation that is capable of manipulating and displaying CAD/CAM, polygonal and volume data models.

The graphics workstation is capable of manipulating models from computer aided design or volume data with the aid of a custom accelerator circuit, employs a host computer that converts the model or volume data to a point and normal display list. A user employs input devices to select planes in which to cut the structures in the model, three-dimensional orientation of the model, and screen cut planes which define a workstation viewing region. A model clipping circuit determines points within the model cut planes. A rotate circuit rotates point and normal vectors in the point and normal display list and determines shading based upon the orientation of the normal vector at each point. A screen clipping circuit determines points within a region defined by screen cut planes. A shading circuit determines back-facing surface elements by the sign of a component of its normal vectors and colors them with a constant color. A display circuit displays a three-dimensional image of multiple surfaces that are within the model cut planes and the screen cut planes, allowing the user to differentiate between the inside and outside surfaces. The workstation is capable of displaying the models as shaded three-dimensional solid surfaces redrawn at a rate of several times per second on a relatively low-power graphics workstation, allowing near-realtime manipulation.

## BRIEF DESCRIPTION OF THE DRAWINGS

The features of the invention believed to be novel are set forth with particularity in the appended claims. The invention itself, however, both as to organization and method of operation, together with further objects and advantages thereof, may best be understood by reference to the following description taken in conjunction with the accompanying drawing in which:

Fig. 1    is a simplified block diagram of the system of the invention.

Fig. 2    is an illustration of a model to be displayed intersecting a model clip box and a screen clip box.

Fig. 3    is a simplified block diagram of the shading circuit of the invention.

Fig. 4    is an illustration of a cut surface model revealing the back-facing surface.

Fig. 5    is an illustration of a cut surface model having the back-facing surface replaced to be displayed as a solid by the system at the invention.

Fig. 6    is a flow diagram of the method of producing a three-dimensional image according to the invention.

Fig. 7    is a graphic image of a portion of a solid model produced by a prior art method wherein both the back-facing and front-facing surfaces are shaded in the same manner.

Fig. 8    is a graphic image of a portion of a solid model produced with the use of the present invention wherein the back-facing surface is replaced by a constant color and the front-facing surface is shaded.

## DETAILED DESCRIPTION OF THE INVENTION

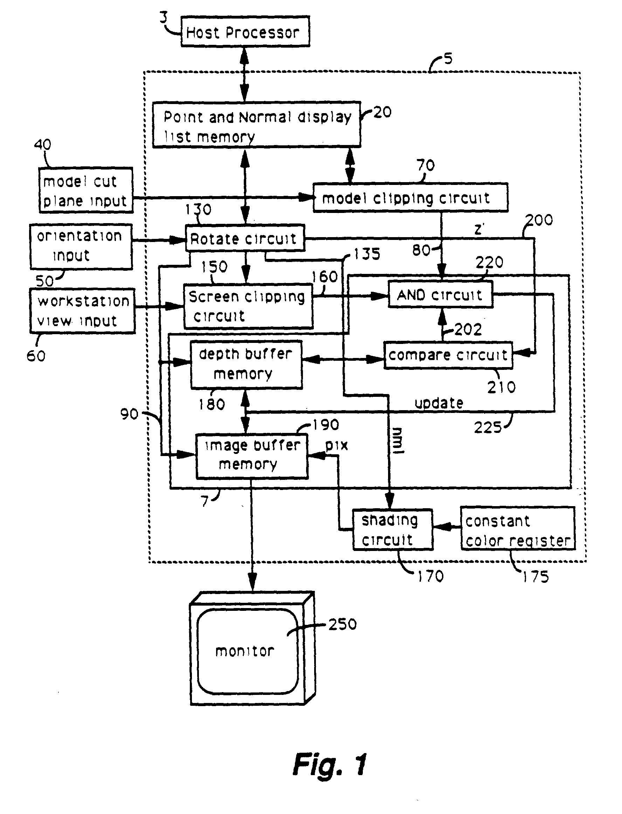

In Fig. 1, a host processor 3 is shown for creating a point and normal display list from either a polygonal model supplied by a CAD/CAM system, or from volume data obtained from a system for providing three-dimensional imaging , such as Positron Emission Tomography, Computed Axial Tomography, Magnetic Resonant Imaging, etc. The point and normal display list is comprised of points (x,y,z) and normal vectors associated with each point $(n_x,n_y,n_z)$. The point and normal display list is stored in a point and normal display list memory 20 of an accelerator board 5.

Many elements of the accellerator board are similar to elements in U.S. Patent 4,985,834 *System and Method Employing Pipelined Parallel Circuit Architecture For Displaying Surface Structures of the Interior Region of a Solid Body* by Harvey E. Cline, Richard I. Hartley, Siegwalt Ludke and Sharbel E. Noujaim issued Jan. 15, 1991 assigned to the present assignee.

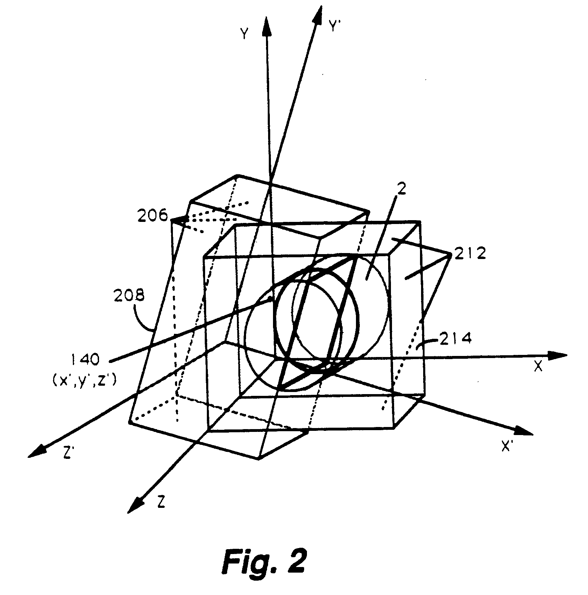

With reference now to Figs. 1 and 2, a user actuates input device 40 to select sections through a model 2 to be displayed, the sections being the model cut planes 206. These planes are defined in reference to an X',Y',Z' coordinate system (model space) and remain fixed with respect to model 2 throughout rotation of the model. The user actuates input device 50 to select a three-dimensional orientation of model 2 in space, and actuates input device 60 to select screen cut planes 212 to cut through model 2. The screen cut planes 212 remain fixed with respect to a monitor screen 250 and an X,Y,Z coordinate system (workstation space), but change relative to model 2 as the model is rotated. The parameters from the input devices 40, 50, 60 are used to manipulate, and display selected portions of, the 3D model.

A model clipping circuit 70 receives the model cut planes 206 from input device 40 and determines a model clip box 208 defined by model cut planes 206. Model clipping circuit 70 then compares each point (x, y,z) in display list memory 20 to determine if it is within model clip box 208.

If a point (x,y,z) lies within model clip box 208, a select line 80 connecting model clipping circuit 70 and an AND circuit 220 is set 'high' by circuit 70.

A rotate circuit 130 receives the orientation input parameters from input device 50 and creates a 4X4 transformation matrix. Both the point (x,y,z) and the normal vector $(n_x,n_y,n_z)$ are transformed by rotate circuit 130 to yield a transformed point (x',y',z') 140 and a pixel intensity nml used for shading the image. Rotate circuit 130 transforms the point (x,y,z) and the normal vectors $(n_x,n_y,n_z)$ according to the following equations:

$$x' = m_{11}x + m_{12}y + m_{13}z + m_{14}$$

$$y' = m_{21}x + m_{22}y + m_{23}z + m_{24}$$

$$z' = m_{31}x + m_{32}y + m_{33}z + m_{34}$$

$$nml = m_{41}n_x + m_{42}n_y + m_{43}n_z$$

where "$m_{11} ... m_{43}$" are matrix elements calculated to orient and translate the model and nml is the present calculated pixel intensity used to shade the surface. (Matrix element $m_{44}$ is 0.) Rotate circuit 130 passes the rotated coordinates (x',y') along an address bus 90 to both a depth buffer memory 180 and an image buffer memory 190. The coordinates (x',y') are used as an address of both memories. Rotate circuit 130 also passes the value nml to a shading circuit 170 through a bus 135. Shading circuit 170 either passes the value nml to image buffer memory 190 as a pixel intensity pix, if the sign of nml is positive otherwise shading circuit 170 passes a constant value indicating a constant color from a constant color register 175, as the pixel intensity pix.

A screen clipping circuit 150 receives the screen cut planes 212 from input device 60 and creates a screen clip box 214 similar to model clip box 208, but which is stationary with respect to monitor screen 250. The transformed point (x',y',z') 140 is compared to the screen clip box 214 in the space of the workstation. If point (x',y',z') 140 is within screen clip box 214, line 160 connecting screen clipping circuit 150 to AND circuit 220 is set 'high' by circuit 150.

A display circuit 7 displays an image exposed surfaces created from the transformed points within the desired region. The image resembles a solid object with superficial surfaces being visible and surfaces which lie behind the superficial surfaces being hidden. The display circuit is comprised of depth buffer memory 180, AND circuit 220, image buffer memory 190 and a compare circuit 210.

Compare circuit 210 receives a depth coordinate z' from a bus 200 and compares the depth z' with a present value in depth buffer 180 at address (x',y').

If the depth z' of the present point (x',y',z') is closer to the viewer (i.e., has a smaller value) than the previous depth stored in depth buffer memory 180 at address (x',y'), then compare circuit 210 sets a depth line 202 connected to AND circuit 220 'high'.

AND circuit 220 sets 'high' an 'update' line 225 coupled to both depth buffer memory 180 and image buffer memory 190 when it senses lines 80, 160 and 202 all being 'high', causing the pixel intensity pix to be stored at address (x',y') of the image buffer memory. When update line 225 goes 'high', depth z' is stored at address (x',y') of the depth buffer memory, thereby updating the present depth at address (x',y'). After all points in the model have been processed, the image buffer memory is displayed as a shaded image on monitor 250.

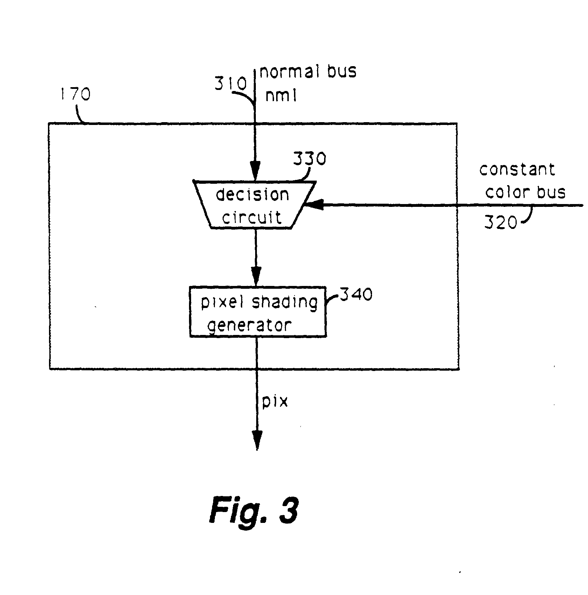

In Fig. 3, shading circuit 170 is shown receiving the value nml from bus 135. Shading circuit 170 also receives a value from constant color register 175 on bus 320. A decision circuit 330 determines whether the sign of the value nml is positive. If the sign of nml is positive, then the surface is front-facing and the value nml is passed to a pixel shading generator 340; otherwise, the surface is back-facing and the value representing a constant color received on bus 320 is passed to pixel shading generator 340. Pixel shading generator creates a signal representing the value it receives from decision circuit 330. The result is that back-facing surfaces are colored with a constant color and front-facing surfaces are shaded according to the orientation of their surface vectors.

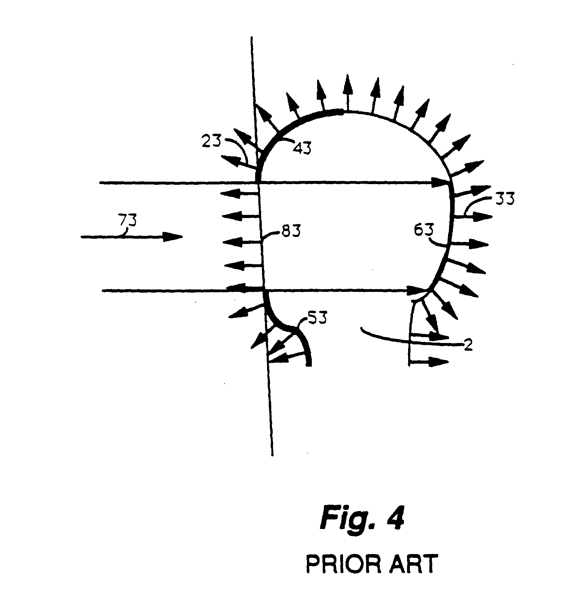

In Fig 4, a cut surface of a model 2 is viewed from a view direction 73. A cut removes part of the surface, allowing the viewer to see inside the model. The surface is a shell surrounding the model, without solid information. Both the front-facing surfaces 43, 53 and the back-facing surface 63 are visible and would be shaded in a similar manner if displayed according to the prior art "dividing cubes" method, resulting in an image that presents no differentiation between front-facing and back-facing surfaces.

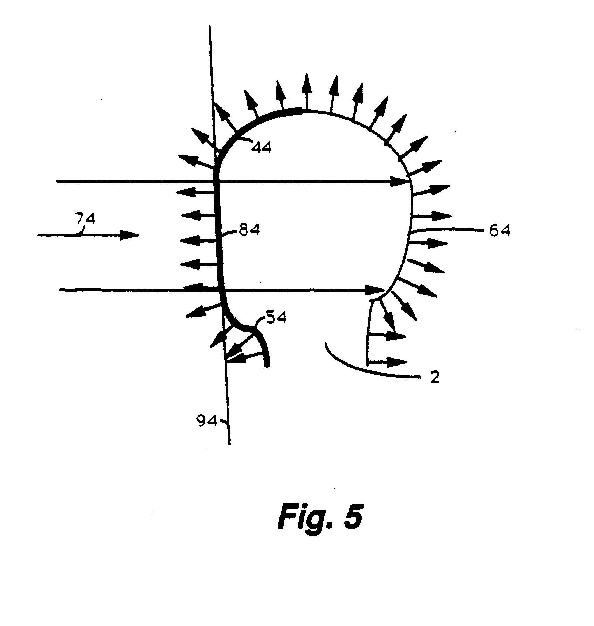

Components of the front-facing surfaces 43, 53 along the view direction of normal vectors 23 are positive while the components of back-facing surfaces along the view direction of normal vectors 33 are negative. The surface normal information can be used to generate an image resembling a solid cut by shading back-facing surface elements with a constant color as shown in Fig. 5.

Fig. 5 shows the same model 2 with the same cuts as that of Fig. 4, but employs the method of the present invention. A surface 64 having normal vectors with components having negative values is a back-facing surface. Back-facing surface 64 is replaced with the constant color by shading circuit 170 (Fig. 1) thereby causing it to appear as a synthesized surface 84 located at the cut plane 94. Front-facing surfaces 44, 54 are not replaced, and are shaded as in conventional methods such as the "dividing cubes" method. Therefore, the appearance of the hollow cut surface is converted to that of a cut solid model by applying the method of the present invention.

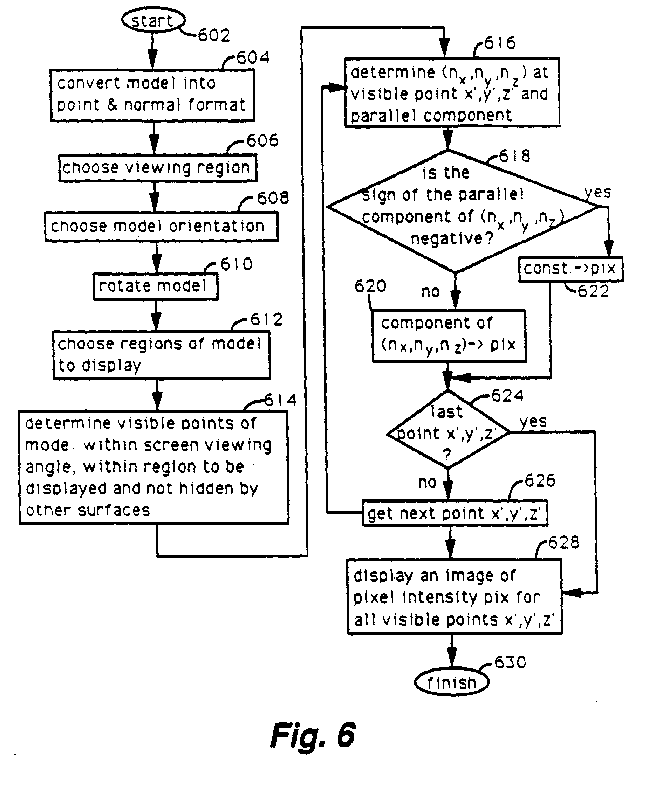

Fig. 6 is a flow chart of the method employed by the present invention for producing a three-dimensional image. The method begins at step 602. A model is converted to a point and normal display format at step 604. The user chooses a viewing region at step 606 and a model orientation at step 608. The model is rotated at step 610 according to the chosen model orientation. The user also chooses regions of the model to be displayed at step 612. Visible points are determined at step 614 based upon the user input and the model data, visible points being points within the regions defined by the user and are points on surfaces which are not obscured by other surfaces when viewed from a selected viewing angle. (The viewing angle is the complement of the model orientation angle which the user has chosen.) The normal vector and a component of the normal vector which is parallel to the viewing angle, are determined at step 616. At step 618, the component of the normal vector parallel to the viewing angle is tested to determine whether it has a positive or negative value. If the parallel component of the normal vector has a positive value, the magnitude of the normal vector is used as the pixel intensity, pix. On the other hand, if the parallel component of the normal vector has a negative value, the pixel intensity, pix, is set to a predetermined constant value, which is a value that indicates a screen color with which to fill-in back-facing surfaces. At step 624, a determination is made to find if all the points have been processed. If less than all the points have been processed, the next point to be processed is chosen at step 626 and the method continues at step 616. When all the points have been processed, the pixel intensity values pix for all visible points are displayed to create an image of a solid three-dimensional surface with all back-facing surfaces replaced by a constant color. The method concludes at step 630.

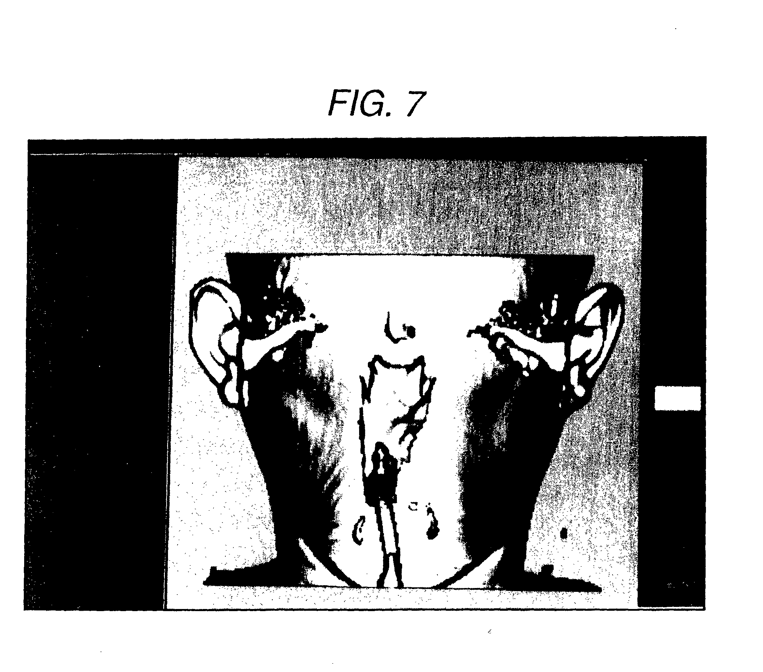

An image created by the use of a conventional method is shown in Fig. 7. Here both the front-facing and back-facing surfaces are shaded in the same manner. When there are multiple model cut planes and multiple screen cut planes passing through multiple models in a model, it becomes very difficult to determine if a surface is front-facing or back-facing, thereby causing confusion to an observer.

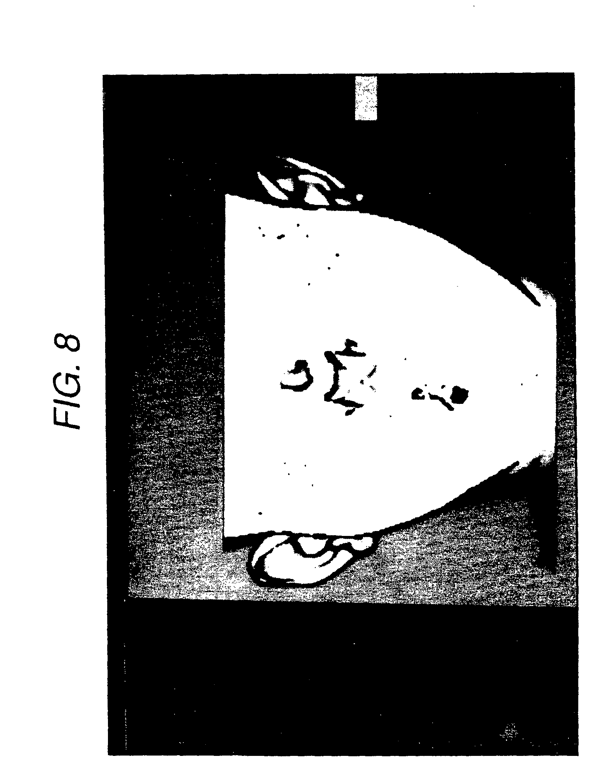

An image created by the method of the present invention is shown in Fig 8. A slice is taken through the face of a subject. Only the sinus passages can be seen in the center of the face with the back of the skull hidden by the constant color. This allows a more discernable view of the portions of the image being displayed.

While several presently preferred embodiments of the invention have been described in detail herein, many modifications and variations will now become apparent to those skilled in the art. It is, therefore, to be understood that the appended claims are intended to cover all such modifications and variations as fall within the scope of the invention claimed.

**Claims**

1. A graphics workstation for manipulating and displaying a point and normal surface model comprising:

   a) a point and normal display list memory (20);

   b) a host computer adapted for creating a point and normal display list comprised of a set surface points (x,y,z) and normal vectors $(n_x,n_y,n_z)$ from a surface model, the host computer also storing the display list in the point and normal display list memory;

   c) a first input device (40) for defining model cut planes fixed with respect to the model;

   d) a second input device (50) for defining a three-dimensional orientation of said model in space;

   e) a third input device (60) for defining screen cut planes of the model fixed in relation to the display;

   f) a model clipping circuit (70) responsive to the first input device (40) for creating a signal indicating when a point (x,y,z) is within a region defined by model cut planes provided by the first input device (40);

   g) a rotate circuit (130) responsive to the second input device (50) for transforming each point (x,y,z) and normal vector $(n_x,n_y,n_z)$ in the display list to a transformed point (x',y',z') having an address (x',y') and a depth z', and a normal vector value nml according to the three-dimensional orientation provided by the second input device (50);

   h) a screen clipping circuit (150) responsive to the third input device (60) for creating a signal indicating when a transformed point (x', y', z') is within a region defined by screen cut planes provided by the third input device (60);

   i) a constant color register (175) for storing a predetermined constant color value;

   j) a shading circuit (170) responsive to the constant color register (175) and the rotate circuit (130) for receiving the constant color value from the constant color register (175) and receiving the normal vector value NML from the rotate circuit (130), said shading circuit (170) being adapted to create a signal pix for back-facing surface points as represented by the constant color value, and a signal pix for front-facing surface points as represented by the NML value depending on the sign of the vector component';

   k) a display circuit (7) responsive to the model clipping circuit (70), the screen clipping circuit (160), and the shading circuit (170) and being adapted to determne a set of visible surface points, the set being the transformed points (x', y',z') within the selected screen viewing region, being within the selected regions of the model, and not being behind other surfaces when viewed from the selected viewing angle being the complement of the selected model orientation angle so as to form a three dimensional (3D) image of multiple surfaces from transformed points (x',y',z') and the signal pix from the shading circuit (170); and

l) a display monitor (250) for displaying the 3D image.

2. A method of producing a three-dimensional graphic image of a surface model comprising the steps of:

a) converting (604) said model into surfaces defined by a set of surface points, each point having a unit vector point associated with it pointing in a direction normal to the surface at that point;

b) defining model cut planes fixed with respect to the model for selecting (606) a screen viewing region;

c) selecting (608) a model orientation;

d) rotating (610) said model to the model orientation to obtain transformed points (x' ,y' ,z') with an address (x',y') and a depth (z') and a normal vector value nml,

e) selecting (612) regions of the model to be displayed;

f) determining when a point (x,y,z) is within the selected viewing reguion;

g) determining (614) a set of visible surface points, the set being the transformed points (x', y',z') within the selected screen viewing region, being within the selected regions of the model, and not being behind other surfaces when viewed from the selected viewing angle being the complement of the selected model orientation angle;

h) determining (616), at each transformed visible surface point (x',y',z'), a component of a normal vector $(n_x, n_y, n_z)$ that is parallel to the selected viewing angle;

i) testing (618) the sign of the vector component for each of the transformed points (x ,y ,z),

i. if the sign of the vector component is positive so as to indicate a front-facing surface at point (x',y',z'), setting a value pix to that of the vector component.

ii. if the sign of the vector component is negative so as to indicate a back-facing surface at point (x',y',z'), setting the value pix to that of a predetermined number;

j) displaying (628) the value pix for each of the visible points to produce a 3D image.

**Patentansprüche**

1. Graphik-Workstation zum Handhaben und Darstellen eines Punkt- und Normalflächenmodells, enthaltend:

a) einen Punkt- und Normaldisplaylistenspeicher (20),

b) einen Host-Computer, der eine Punkt- und Normaldisplayliste kreieren kann, die von einem Satz von Oberflächenpunkten (x,y,z) und Normalvektoren $(n_x, n_y, n_z)$ aus einem Oberflächenmodell gebildet ist, wobei der Host-Computer auch die Displayliste in dem Punkt- und Normaldisplaylistenspeicher speichert,

c) eine erste Eingabevorrichtung (40) zum Definieren von Modellschnittebenen, die in bezug auf das Modell fest sind,

d) eine zweite Eingabevorrichtung (50) zum Definieren einer dreidimensionalen Orientierung des Modells im Raum,

e) eine dritte Eingabevorrichtung (60) zum Definieren von Schirmschnittebenen des Modells, die in Relation zum Display fest sind,

f) eine Modellklippschaltung (70), die auf die erste Eingabevorrichtung (40) anspricht, zum Kreieren eines Signals, das anzeigt, wenn ein Punkt (x,y,z) innerhalb eines Bereiches ist, der durch Modellschnittebenen definiert ist, die durch die erste Eingabevorrichtung (40) geliefert werden,

g) eine Drehschaltung (130), die auf die zweite Eingabevorrichtung (50) anspricht, zum Transformieren jedes Punktes (x,y,z) und Normalvektors $(n_x, n_y, n_z)$ in der Displayliste in einen transformierten Punkt (x', y', z') mit einer Adresse (x', y') und einer Tiefe (z') und einen Normalvektorwert nml gemäß der dreidimensionalen Orientierung, die durch die zweite Eingabevorrichtung (50) geliefert wird,

h) eine Schirmklippschaltung (150), die auf die dritte Eingabevorrichtung (60) anspricht, zum Kreieren eines Signals, das anzeigt, wenn ein transformierter Punkt (x', y', z') innerhalb eines Bereiches ist, der durch Schirmschnittebenen definiert ist, die durch die dritte Eingabevorrichtung (60) geliefert werden,

i) einen Konstantfarbenspeicher (175) zum Speichern eines vorbestimmten konstanten Farbwertes,

j) eine Schattierungsschaltung (170), die auf den Konstantfarbenspeicher (175) und die Drehschaltung (130) anspricht, zum Empfangen des konstanten Farbwertes aus dem Konstantfarbenspeicher (175) und zum Empfangen des Normalvektorwertes nml aus der Drehschaltung (130), wobei die Schattierungsschaltung (170) in der Lage ist, ein Signal pix für nach hinten gerichtete Oberflächenpunkte, wie sie durch den Konstantfarbenwert dargestellt sind, und ein Signal pix für nach vorn gerichtete Oberflächenpunkte zu kreieren, wie sie durch den nml Wert dargestellt werden, der von dem Vorzeichen der Vektorkomponente abhängt,

k) eine Displayschaltung (7), die auf die Modellklippschaltung (70), die Schirmklippschaltung (160) und die Schattierungsschaltung (170) anspricht und in der Lage ist, einen Satz von sichtbaren Oberflächenpunkten zu ermitteln, wobei der Satz die transformierten Punkte (x', y', z') innerhalb des gewählten Schirmsichtbereiches ist, der innerhalb der gewählten Bereiche des Modells ist und nicht hinter anderen Oberflächen ist, wenn man aus dem gewählten Sichtwinkel schaut, der das Komplement des gewählten Modellorientierungswinkels ist, um so ein dreidimensionales (3D) Bild von vielen Oberflächen aus transformierten Punkten (x', y', z') und dem Signal pix aus der Schattierungsschaltung (170) zu bilden, und

l) einen Displaymonitor (250) zum Darstellen des 3D Bildes.

2. Verfahren zum Erzeugen eines dreidimensionalen graphischen Bildes von einem Oberflächenmodell, enthaltend die Schritte:

a) Wandeln (604) des Modells in Oberflächen, die durch einen Satz von Oberflächenpunkten definiert sind, wobei jedem Punkt ein Einheitsvektorpunkt zugeordnet ist, der in einer Richtung normal zur Oberfläche an diesem Punkt gerichtet ist,

b) Definieren von Modellschnittebenen, die in bezug auf das Modell fest sind, zum Wählen (606) eines Schirmsichtbereiches,

c) Wählen (608) einer Modellorientierung,

d) Drehen (610) des Modells in die Modellorientierung, um transformierte Punkte (x', y', z') mit einer Adresse (x', y') und einer Tiefe (z') und einem Normalvektorwert nml zu erhalten,

e) Wählen (612) von darzustellenden Bereichen des Modells,

f) Ermitteln, wenn ein Punkt (x,y,z) innerhalb des gewählten Sichtbereiches ist,

g) Ermitteln (614) eines Satzes von sichtbaren Oberflächenpunkten, wobei der Satz die transformierten Punkte (x', y', z') innerhalb des gewählten Schirmsichtbereiches ist, der innerhalb der gewählten Bereiche des Modells ist und nicht hinter anderen Oberflächen ist, wenn man aus dem gewählten Sichtwinkel schaut, der das Komplement des gewählten Modellorientierungdswinkels ist,

h) Ermitteln (616) an jedem transformierten sichtbaren Oberflächenpunkt (x', y', z') einer Komponente von einem Normalvektor ($n_x$, $n_y$, $n_z$), der parallel zu dem gewählten Sichtwinkel ist,

i) Prüfen (618) des Vorzeichens der Vektorkomponente für jeden der transformierten Punkte (x', y', z'),

i. wenn das Vorzeichen der Vektorkomponente positiv ist, um dann eine nach vorn gerichtete Oberfläche am Punkt (x', y', z') anzuzeigen, Setzen eines Wertes pix auf den von der Vektorkomponente,

ii. wenn das Vorzeichen der Vektorkomponente negativ ist, um dann eine nach hinten gerichtete Oberfläche am Punkt (x', y', z') anzuzeigen, Setzen des Wertes pix auf den von einer vorbestimmten Zahl,

j) Darstellen (628) des Wertes pix für jeden der sichtbaren Punkte, um ein 3D Bild zu erzeugen.

**Revendications**

1. Station de travail graphique pour manipuler et afficher un modèle surfacique à points et normales comprenant :

a) une mémoire (20) de liste d'affichage de points et normales ;

b) un ordinateur hôte adapté pour créer une liste d'affichage de points et normales constituée d'un ensemble de points de surface (x,y,z) et de vecteurs normaux ($n_x$,$n_y$,$n_z$) à partir d'un modèle surfacique, l'ordinateur hôte stockant également la liste d'affichage dans la mémoire de liste d'affichage de points et normales ;

c) un premier dispositif d'entrée (40) pour définir des plans de coupe de modèle fixes par rapport au modèle ;

d) un deuxième dispositif d'entrée (50) pour définir une orientation tridimensionnelle dudit modèle dans l'espace ;

e) un troisième dispositif d'entrée (60) pour définir des plans de coupe d'écran du modèle, fixes par rapport au dispositif d'affichage ;

f) un circuit de découpage de modèle (70) réagissant au premier dispositif d'entrée (40) pour créer un signal indiquant quand un point (x,y,z) se trouve dans une région définie par des plans de coupe de modèle fournis par le premier dispositif d'entrée (40) ;

g) un circuit de rotation (130) réagissant au deuxième dispositif d'entrée (50) pour transformer chaque point (x,y,z) et chaque vecteur normal ($n_x$,$n_y$,$n_z$) de la liste d'affichage en un point transformé (x',y',z') ayant une adresse (x',y') et une profondeur (z'), et une valeur de vecteur normal nml selon l'orientation tridimensionnelle fournie par le deuxième dispositif d'entrée (50) ;

h) un circuit de découpage d'écran (150) réagissant au troisième dispositif d'entrée (60) pour créer un signal indiquant quand un point transformé (x',y',z') se trouve dans une région définie par des plans de coupe d'écran fournis par le troisième dispositif d'entrée (60) ;

i) un registre de couleur constante (175) pour stocker une valeur de couleur constante préalablement déterminée ;

j) un circuit d'ombrage (170) réagissant au registre de couleur constante (175) et au circuit de rotation (130) pour recevoir la valeur de couleur constante du registre de couleur constante (175) et recevoir la valeur de vecteur normal NML du circuit de rotation (130), ledit circuit d'ombrage (170) étant adapté pour créer un pixel de signal pour les points de surfaces cachées, comme représenté par la valeur de couleur constante, et un pixel de signal pour les points de surfaces frontales, comme représenté par la valeur NML dépendant du signe la composante du vecteur ;

k) un circuit d'affichage (7) réagissant au circuit de découpage de modèle (70), au circuit de découpage d'écran (160) et au circuit d'ombrage (170) et étant adapté pour déterminer un ensemble de points de surfaces visibles, l'ensemble étant constitué des points transformés (x', y',z') compris dans la région de visionnage d'écran choisie, compris dans les régions choisies du modèle, et ne se trouvant pas derrière d'autres surfaces lorsqu'ils sont vus depuis l'angle de visionnage choisi qui est le complément de l'angle d'orientation du modèle choisi afin de former une image tridimensionnelle (3D) de surfaces multiples à partir de points transformés (x',y',z') et du pixel le signal provenant du circuit d'ombrage (170) ; et

l) un moniteur d'affichage (250) pour afficher l'image 3D.

2. Procédé de production d'une image graphique tridimensionnelle d'un modèle surfacique comprenant les étapes consistant à :

    a) convertir (604) ledit modèle en surfaces définies par un ensemble de points de surface, chaque point ayant un point de vecteur unité associé avec lui, pointant dans une direction normale à la surface en ce point ;

    b) définir des plans de coupe de modèle fixes par rapport au modèle pour choisir (606) une région de visionnage d'écran ;

    c) choisir (608) une orientation de modèle ;

    d) faire tourner (610) ledit modèle jusqu'à l'orientation de modèle afin d'obtenir des points transformés (x', y', z') avec une adresse (x',y') et une profondeur (z') et une valeur de vecteur normal nml,

    e) choisir (612) les régions du modèle à afficher ;

    f) déterminer quand un point (x,y,z) se trouve dans la région de visionnage choisie ;

    g) déterminer (614) un ensemble de points de surfaces visibles, l'ensemble étant composé des points transformés (x',y',z') compris dans la région de visionnage choisie, compris dans les régions choisies du modèle, et non compris derrière d'autres surfaces lorsqu'ils sont vus depuis l'angle de visionnage choisi qui est le complément de l'angle d'orientation du modèle choisi ;

    h) déterminer (616), en chaque point de surface visible transformé (x',y',z'), une composante d'un vecteur normal $(n_x, n_y, n_z)$ qui est parallèle à l'angle de visionnage choisi ;

    i) vérifier (618) le signe de la composante du vecteur pour chacun des points transformés (x, y,z),

        i. si le signe de la composante du vecteur est positif de façon à indiquer une surface frontale au point (x',y',z'), mettre un pixel de valeur à celle de la composante du vecteur.

        ii. si le signe de la composante du vecteur est négatif de façon à indiquer une surface cachée au point (x',y',z'), mettre un pixel de valeur à celle d'un nombre préalablement déterminé ;

    j) afficher (628) le pixel de valeur pour chacun des points visibles afin de produire une image 3D.

*Fig. 1*

**Fig. 2**

*Fig. 3*

**Fig. 4**

PRIOR ART

**Fig. 5**

start 602

convert model into
point & normal format 604

choose viewing region 606

choose model orientation 608

rotate model 610

choose regions of model
to display 612

determine visible points of
mode: within screen viewing
angle, within region to be
displayed and not hidden by
other surfaces 614

determine $(n_x, n_y, n_z)$ at
visible point x',y',z' and
parallel component 616

is the
sign of the parallel
component of $(n_x, n_y, n_z)$
negative? 618

yes

const.->pix 622

no 620

component of
$(n_x, n_y, n_z)$-> pix

last
point x',y',z'
? 624

yes

no

get next point x',y',z' 626

display an image of
pixel intensity pix for
all visible points x',y',z' 628

finish 630

*Fig. 6*

FIG. 7

*FIG. 8*